# FASCICULE DE BREVET EUROPEEN

(11) **EP 1 804 420 B1**
(45) Date de publication et mention de la délivrance du brevet: **28.04.2010**
(21) Numéro de dépôt: 06291882.6
(22) Date de dépôt: 06.12.2006
(51) Int. Cl.: H04L 12/14, H04W 4/24

(54) **Procédé et dispositif d'amélioration du fonctionement d'une chaine de taxation par mise en place d'un mode dégradé multi-niveau**
Verfahren und Vorrichtung zur Verbesserung der Funktionsweise einer Gebührenerfassungskette mittels Einsetzung eines abgestuften Modus mit mehreren Ebenen
Method and device for improving the operation of a billing chain by implementing a multi-level backup method

(30) Priorité: 29.12.2005 FR 0513469
(43) Date de publication de la demande: 04.07.2007
(73) Titulaire: Société Française du Radiotéléphone-SFR, 75008 Paris (FR)
(72) Inventeur: Delesques, Jean, 95880 Enghien Les Bains (FR)
(74) Mandataire: Debay, Yves

(56) Documents cités:
- WO-A-2004/086790
- US-A1- 2002 138 427
- US-A1- 2004 139 204
- US-A1- 2005 177 515

## Description

La présente invention est du domaine des télécommunications. Elle concerne les systèmes de taxation en temps réel des opérateurs de télécommunication, et plus particulièrement un procédé et son dispositif d'amélioration du fonctionnement d'une chaîne de taxation par la mise en place d'un mode dégradé multi-niveau. Elle peut cependant s'appliquer par extension à tout système de taxation en temps réel dans d'autres domaines comme la finance, la distribution etc.

La taxation convergente est une tendance forte de l'évolution des systèmes de production des opérateurs de télécommunications mobiles, qui a pour principe d'uniformiser la gestion des offres et sa déclinaison en taxation des usages pour l'ensemble de leurs clients, quels que soient leurs types de contractualisation et leur mode de paiement.

L'opérateur attend de cette évolution plusieurs avantages dont les principaux sont la simplification de l'introduction de nouvelles offres, la réduction du temps de mise sur le marché, la possibilité de gérer des offres plus riches pour des groupes de clients ou la simplification de la maintenance des systèmes.

Cette évolution nécessite de remplacer deux chaînes traditionnelles de traitement de la taxation, l'une en temps différé traitant les abonnés et exploitée par les systèmes d'information, l'autre en temps réel traitant les prépayés et exploitée par le réseau (IN ou réseau intelligent) par une chaîne unique combinant les deux modes, avec une frontière différente des domaines de responsabilité du réseau et des systèmes d'information.

Plusieurs architectures sont envisageables, mais un consensus assez fort se dégage pour les opérateurs de taille comparable par exemple à la taille de SFR et ayant un fort parc de clients abonnés pour une architecture utilisant un serveur de taxation centralisé exploité par les systèmes d'information.

Actuellement, ces chaînes de taxation convergente en temps réel sont en général constituées d'éléments de contrôle formant une couche de contrôle, qui pilotent l'utilisation du service à taxer et qui interrogent un serveur de taxation centralisé d'abord pour autoriser l'usage avant de le donner, puis pour facturer l'usage réellement utilisé après sa consommation.

Ces chaînes de taxation exploitent des modes dégradés à un seul niveau qui mettent en oeuvre une politique d'autorisation de secours minimaliste au niveau du système de contrôle en cas d'indisponibilité du système de taxation centralisé et ce, quelle qu'en soit la cause. La demande de brevet publiée US 2002/0138427 propose ainsi un dispositif qui surveille les communications effectuées avec une unité de payement. Lorsque la connexion avec l'unité de payement ne fonctionne plus, la politique de secours se limite à mettre en attente les informations destinées à être transmises jusqu'à ce que la connexion soit rétablie, la surveillance du rétablissement de la connexion s'effectuant par des essais de communication successifs.

On parle de mode dégradé pour indiquer que le service ne va pas être rendu avec le même niveau de qualité, soit parce qu'il peut être accordé ou refusé à tort, soit parce qu'il ne peut être rendu que de manière partielle.

Le mode dégradé simple niveau se base sur le fait que les éléments de la couche de contrôle sont beaucoup moins exposés aux changements, donc aux pannes logicielles et aux erreurs d'exploitation. Leur disponibilité est donc plus forte, et il est donc en général proposé d'établir un mode de fonctionnement où ils assurent de manière autonome un service dégradé au client lorsque le serveur de taxation centralisé est indisponible.

Les éléments de la couche de contrôle disposent alors d'une politique d'autorisation minimaliste de secours, qu'ils appliquent lorsque le serveur de taxation centralisé n'est pas disponible, en lieu et place des transactions d'autorisation. A la fin de l'usage, les éléments pour faire la taxation finale sont préparés comme dans le mode nominal, mais sont écrits dans un fichier qui sera traité en mode différé, par le module de taxation offline, dès qu'il sera disponible.

Les solutions actuelles présentent cependant de nombreux et importants inconvénients.

En effet, l'indisponibilité du serveur de taxation centralisé vue d'un élément de contrôle peut être totale ou partielle et peut avoir des durées très variables du fait de la diversité des causes possibles: pannes matérielles ou de réseau, problèmes logiciels, erreurs d'exploitation, etc...

Le niveau de dégradation du service rendu au client pendant le temps de réparation qui suit la panne est fonction de la sophistication de la politique d'autorisation de secours mise en place dans l'élément de contrôle.

Un service très simplifié et donc fortement dégradé, comme autoriser ou interdire en fonction du type d'usage sans tenir compte de la balance du client est acceptable, si la durée de remise en service est de l'ordre de quelques minutes, ce qui est vrai pour les pannes d'origines matérielles ou réseau, compte tenu des configurations redondantes utilisées pour ce type de système.

Par contre, dans le cas d'une panne logicielle ou d'une erreur d'exploitation, qui peuvent demander plusieurs heures de remise en état du système, le comportement vu du client du système peut être fortement perturbé.

En effet, dans le mode dégradé les éléments de la couche de contrôle n'ayant plus de réponse de la couche de taxation, l'autorisation d'utiliser un service ne pourra plus se faire, ou se faire sur des critères beaucoup plus simples et figées que dans le cas d'un fonctionnement normal sans panne, ce qui présente un inconvénient important puisque pouvant entraîner des autorisations ou des refus de services à tort.

Or, en cas de panne nécessitant une remise en état longue, le mode dégradé doit rester proche du système nominal et donc la politique d'autorisation de secours doit tenir compte si possible de l'offre souscrite, de l'état de sa balance avant la panne et de sa consommation durant la panne, afin que cette dernière ne soit pas perçue par le client dans la majorité des cas.

La solution serait donc de permettre aux éléments de la couche de contrôle d'effectuer une partie des fonctions de la couche de taxation lors de la mise en oeuvre du mode dégradé.

Pour cela l'élément de contrôle qui voudrait mettre en place une politique d'autorisation de secours aussi sophistiquée devra maintenir en permanence les données nécessaires, pour reprendre la main sans interruption de service dès la détection de l'indisponibilité du serveur de taxation. Cette reprise nécessite des échanges complexes entre ces deux systèmes, d'autant plus difficiles à mettre en place que :
- ces systèmes proviennent de fournisseurs différents :
   équipementiers pour le contrôle, éditeurs de logiciels de taxation pour le serveur centralisé,
   - les éléments de contrôle sont multiples, distribués et hétérogènes,
   - le protocole de dialogue entre les éléments de contrôle et de la couche de taxation en mode temps réel est en voie de normalisation et utilisera une interface Diameter CCA qui est une interface normalisée par le 3GPP (organisme de normalisation en charge de la téléphonie mobile de troisième génération) et qui définit le type de session et de présentation. CCA indique qu'il s'agit d'un protocole spécifique aux fonctions de taxation (CCA = Convergent Charging Application), mais ne prévoit pas d'extension permettant de transmettre ce niveau d'information,
   - enfin, l'algorithmique permettant, à partir de ces données, de maintenir le niveau de service dégradé nécessaire sur des systèmes hétérogènes répartis, n'est pas envisageable de façon réaliste.

La présente invention a donc pour objet de supprimer un ou plusieurs des inconvénients de l'art antérieur en définissant un procédé de fiabilisation des services rendus par un réseau utilisant un serveur de taxation centralisé pour autoriser l'usage d'un service offert par le réseau même en cas de panne du réseau ou du serveur de taxation.

A cet effet, l'invention concerne un procédé de fiabilisation multi-niveau des services rendus par un réseau utilisant un serveur de taxation centralisé pour autoriser l'usage d'un service offert par le réseau, si le crédit client est suffisant, comportant un premier niveau formé par une couche de contrôle qui comprend des moyens de surveillance et de vérification de l'attribution, du déroulement et de la finalisation des usages des services, et un deuxième niveau formé par la couche de taxation centralisée qui comprend deux modes de traitement, l'un en temps réel, l'autre en différé, faisant intervenir les mêmes moyens de valorisation,
le premier niveau formé par la couche de contrôle comprend un élément de surveillance de l'absence de réponse dans un délai déterminé de la couche de taxation du serveur de taxation à une requête de la couche de contrôle et permet, lors d'une absence de réponse de la couche de taxation si le réseau entre la couche de contrôle et la couche de taxation est indisponible pour un traitement en temps réel, de déclencher un premier plan de secours en basculant la transmission des données de taxation vers un module de traitement en mode différé, et
le deuxième niveau formé par la couche de taxation centralisée, subdivisée en une couche frontale comprenant des moyens qui permettent la présentation et le routage des données de taxation et une couche dorsale qui comprend des moyens pour assurer le traitement et la gestion des données de taxation, permet d'effectuer les étapes suivantes :
- la surveillance de la disponibilité de la couche dorsale de la couche de taxation à partir de sa réponse à une requête provenant de la couche frontale de la couche de taxation dans un délai déterminé par l'intermédiaire de moyens de surveillance,
- l'exécution d'une politique de secours par une couche frontale de la couche de taxation en cas d'indisponibilité de la couche dorsale de taxation par des moyens de mise en oeuvre de la politique de secours,
- la préparation à la fin de l'usage des éléments représentatifs de l'usage effectué par des moyens de contrôle de l'usage,
- la mémorisation de ces éléments représentatifs de l'usage effectué dans un fichier de mémorisation par des moyens de mémorisation,
- l'interrogation périodique du fichier de mémorisation pour effectuer la taxation en différé dès que la communication entre la couche frontale de la couche de taxation et la couche dorsale de la couche de taxation est rétablie.

Le principe de l'invention est donc de répartir sur au moins deux niveaux le traitement des indisponibilités potentielles du serveur centralisé de taxation.

Le premier niveau reste celui assuré par les éléments de contrôle décrits précédemment, qui n'adresse plus que les indisponibilités du réseau d'interconnexion ou de l'interface d'entrée du serveur de taxation.

Le second niveau est basé sur le fait que le serveur de taxation centralisé est lui-même une structure complexe avec au moins deux couches : une première couche appelée couche frontale comportant des moyens de présentation et de routage et une deuxième couche appelée couche dorsale assurant le traitement et la gestion de données.

Selon une autre particularité lors de l'étape d'exécution d'une politique de secours les informations provenant de la couche frontale sont envoyées à un module de secours grâce à la capacité de présentation et de routage de la couche frontale.

Selon une autre particularité le délai de l'étape de surveillance est de 50 ms.

L'invention a également pour objet de proposer un dispositif de fiabilisation des services rendus par un réseau utilisant un serveur de taxation centralisé pour autoriser l'usage d'un service offert par le réseau.

A cet effet, l'invention concerne un dispositif de fiabilisation des services rendus par un réseau utilisant un serveur de taxation centralisé pour autoriser l'usage d'un service offert par le réseau si le crédit client est suffisant, le dispositif comprenant une couche réseau qui communique avec une couche de contrôle de politique de secours, elle-même communiquant avec une couche de taxation subdivisée en une couche frontale de présentation et de routage des données et une couche dorsale de traitement et de gestion des données de taxation, la couche de contrôle comportant des éléments permettant la mise en oeuvre d'une première politique de secours simple au niveau de la couche de contrôle basculant la transmission des données de taxation vers un module alternatif de traitement, caractérisé en ce que lesdits éléments de la couche de contrôle comprennent un élément logiciel comportant des moyens de surveillance de l'absence de réponse de la couche de taxation, et
en ce que des éléments de la couche frontale de la couche de taxation comportent des moyens permettant la surveillance de la réponse dans un délai déterminé de la couche dorsale de la couche de taxation à une requête de la couche frontale, ces moyens de surveillance étant reliés à des moyens d'exécution d'une deuxième politique de secours par la couche de contrôle situés dans la couche frontale de la couche de taxation, des moyens de contrôle de l'usage effectué permettant la préparation à la fin de l'usage des éléments représentatifs de l'usage effectué et des moyens de mémorisation permettant de mémoriser les informations concernant l'usage pendant la durée d'indisponibilité de la couche dorsale de la couche de taxation.

Selon une autre particularité les moyens de surveillance sont constitués par un compteur de temps disposé dans la couche frontale.

Selon une autre particularité la couche frontale comporte un module de formatage et de routage des requêtes dont les données de routage peuvent être modifiées par la politique de secours, le module de formatage et de routage des requêtes étant capable de modifier son routage et basculer en mode dégradé lorsque le réseau pour accéder à la couche dorsale de la couche de taxation est indisponible.

Selon une autre particularité la couche dorsale comporte un module nominal de traitement et gestion des données et un module de secours de traitement et gestion des données, les deux modules étant en relation avec le module de formatage et de routage.

Selon une autre particularité les moyens d'exécution de la politique de secours sont constitués par le module de formatage et de routage relié au module de secours de traitement et gestion des données.

Selon une autre particularité les moyens de contrôle d'usage sont constitués par des modules de valorisation d'usage.

Selon une autre particularité les moyens de mémorisation sont constitués d'un module de mémorisation.

L'invention, avec ses caractéristiques et avantages, ressortira plus clairement à la lecture de la description faite en référence aux dessins annexés donnés à titre d'exemples non limitatifs dans lesquels :
- la figure 1 est une vue schématique de l'architecture d'un système de taxation convergente standard;
- la figure 2 est une vue schématique de l'architecture d'un système de taxation convergente utilisant un mode dégradé simple ;
- la figure 3 est une vue schématique de l'architecture d'un système de taxation convergente utilisant un mode dégradé multi-niveau selon l'invention.

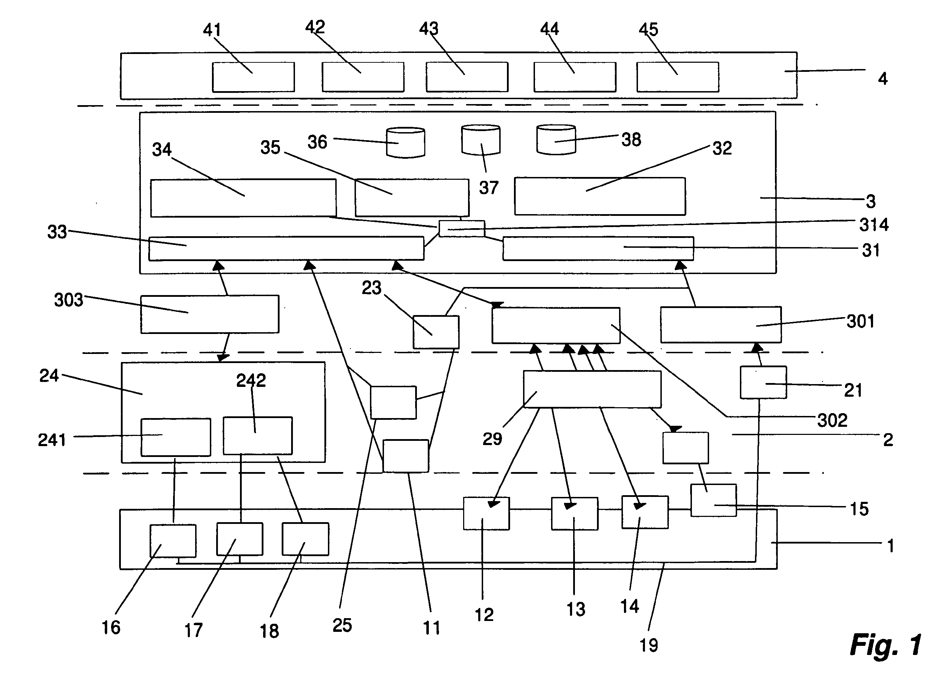

L'invention va à présent être décrite en référence aux figures 1 à 3.

La figure 1 illustre le fonctionnement général et l'architecture technique d'un système de taxation convergente d'un opérateur de télécommunication.

Ce système de taxation est disposé sur plusieurs étages.

Un premier étage correspond à la couche réseau (1). Cette couche réseau (1) est constituée de différents éléments. Au moins un élément et dans le cas illustré au moins deux éléments de réseau chargés de la commutation (16, 17) des circuits voix et des SMS dans un réseau mobile (MSC) et un élément de réseau chargé de l'acheminement (18) des paquets de données dans un réseau mobile (GGSN). Deux types de plateforme PFSn (12, 13, 14) et SDP (15), les plateformes PFSn (12,13, 14) hébergeant un service à valeur ajouté et la plateforme SDP (15) étant une plateforme de service particulière hébergeant les services d'offre spécifique. Le rôle de ces éléments du réseau est de fournir au client l'usage (19) des services qu'il demande. Les services que le client peut demander sont par exemple appeler un autre poste fixe ou mobile, émettre ou recevoir des données, recevoir un contenu, etc..

Un deuxième étage correspond à la couche de contrôle (2). Cette couche de contrôle (2) permet de vérifier que les usages sont bien rendus et le sont à bon escient, en effectuant tous les contrôles nécessaires avant, pendant et après l'usage, comme l'authentification de l'utilisateur et la vérification de ses droits, la vérification de la disponibilité d'un crédit suffisant, la surveillance du bon déroulement et de la bonne fin de l'usage des services demandés, la constitution des éléments permettant de facturer l'usage des services demandés à l'issue de sa terminaison.

La couche de contrôle (2) détient un contexte d'usage des services pendant toute la durée de celui-ci. Pour effectuer les contrôles dont elle a la charge, elle peut s'appuyer soit sur des données internes, soit sur des serveurs externes. C'est le cas en général pour les services d'authentification et de gestion des droits et ce le sera systématiquement pour tous les services touchant à la taxation, qui feront l'objet de transactions passées avec le serveur centralisé de taxation.

En termes de mise en oeuvre, suivant les types d'usages, les couches réseau et contrôle peuvent être localisées dans le même équipement (cas fréquents pour les plateformes de services) ou non (cas de la voix et des données).

La couche de contrôle (2) est constituée d'un ensemble (24) de plateformes et de modules de contrôle. Les plateformes utilisées sont de plusieurs types. Un premier type correspond aux plateformes IN (pour Intelligent Network : réseau intelligent), qui sont chargées de la couche de contrôle pour tous les usages de type Voix, SMS ou données et d'une manière plus générale, pour tous les éléments de réseau disposant d'une interface de contrôle utilisant les protocoles SS7. Cet ensemble de protocoles de signalisation est édicté par le Comité Consultatif International pour la Télégraphie et la Téléphonie (CCITT) et fixe les échanges entre les éléments de réseau et les éléments de la couche contrôle pour permettre l'établissement des appels, l'établissement des sessions d'échanges de données ou l'acheminement des SMS. Un complément au SS7 appelé CAMEL, pour « Customized Applications for Mobile network Enhanced Logical », permet notamment l'interfonctionnement des réseaux d'opérateurs différents. Les modules de contrôle sont au nombre de deux, le module de contrôle de la voix (241) et le module de contrôle des données (242), ces deux modules étant en relation avec les éléments MSC (16, 17) et GGSN (18) de la couche réseau (1).

La couche de contrôle peut comporter également des modules conformes à l'architecture IMS (Internet Multimedia Subsystem) dont les deux principaux types sont des modules d'établissement et de surveillance (11) des sessions de données entre deux mobiles ou entre un mobile et une application et des serveurs informatiques (25) hébergeant une application, constituant un service à valeur ajoutée, interrogeable par un mobile.

Pour des raisons de charges, il peut exister plusieurs instances de chaque type de système qui héberge une couche de contrôle (2), ces instances étant réparties géographiquement sur plusieurs sites pour des raisons de sécurité. Le protocole de dialogue est de type question réponse, toujours sur l'initiative de la couche de contrôle (2), afin que le serveur centralisé de taxation n'ait pas à connaître la topologie des éléments de réseau.

Un troisième étage est constitué par la couche de taxation (3).

Deux types d'interface sont utilisés entre le deuxième étage correspondant à la couche de contrôle (2) et le troisième étage correspondant à la couche de taxation (3).

Un premier type d'interface (303) est utilisée lors des échanges en temps réel (33) entre la couche de contrôle (2) et la couche de taxation (3) et met en oeuvre à la cible le protocole Diameter CCA normalisé par le 3GPP, mais aussi des protocoles spécifiques (29) aux différentes plateformes de services (12, 13, 14 et 15) déployées antérieurement à cette normalisation. Un module de médiation en temps réel (302) est utilisé pour réaliser une conversion de protocole entre ces protocoles spécifiques et les protocoles normalisés 3GPP utilisés par les modules de la couche taxation (Diameter CCA Ro pour les usages à taxer en temps réel et Rf pour les usages à taxer en temps différé)

Un deuxième type d'interface, comprenant les interfaces par échange de fichiers de CDR (Call Data Record) (21) ou les interfaces Rf en cours de normalisation par le 3GPP (23) est utilisé lors des échanges entre la couche de contrôle (2) et la couche de taxation (3) en mode différé (31), pour des fichiers contenant les comptes rendus des usages., Un module de médiation en temps différé (aussi appelé Collecte) (301) est utilisé pour recueillir les fichiers de CDR et les injecter suivant le protocole Rf normalisé dans les modules de la couche de taxation. La couche de taxation (3) a pour fonction d'assurer la valorisation de tous les usages pour tous les clients de l'opérateur en se basant sur des algorithmes, une structure et un catalogue des offres unique.

Pour ce faire le serveur de taxation maintient le contexte de taxation du client, qui comprend principalement une partie plutôt statique avec la description de son contrat (37) et de l'offre (36) qu'il a souscrite, ainsi qu'une partie dynamique avec sa balance (35) et les divers compteurs (38) d'usage nécessaires pour valoriser chaque usage dans le cas des offres complexes comme les forfaits, les bouquets de services. Le traitement en temps réel de tous les usages pour tous les clients n'est pas possible, soit pour des raisons techniques, soit pour des raisons économiques. Le serveur centralisé de taxation possède donc deux modes de fonctionnement, l'un en mode batch, l'autre en mode temps réel, mais qui mettent en oeuvre le même moteur de valorisation (34, 32), donc les mêmes algorithmes et les mêmes offres sur des données communes.

Dans le cas du traitement en mode temps réel, le serveur de taxation (3) centralisé traite des requêtes transactionnelles venant de la couche de contrôle (2), via la première interface (303) temps réel.

Dans le cas du traitement en mode différé, des fichiers contenant les comptes rendus des usages lui sont transmis pour valorisation par la collecte (301), la médiation temps réel ou les autres systèmes par l'interface (23) ***Rf.*** Cette partie de traitement différé présente un fonctionnement classique, qui ne sera donc pas décrit dans le présent document.

La couche de taxation (3) centralisée présente des interfaces multiples avec les autres éléments des systèmes d'information de l'opérateur, principalement avec le module CRM, « Customer Relationship Management », (43) qui gère la relation client. Le module CRM met en oeuvre un ensemble de méthodes marketing mises en place par une entreprise pour acquérir de nouveaux clients, les fidéliser et/ou étendre la relation commerciale avec eux par une relation personnalisée. Le module CRM fait intervenir des informations provenant de différentes directions (ventes, services clients et marketing) au sein d'une entreprise et s'appuie sur divers outils : informations, applications (bases de données, statistiques, sondages, etc.), centre d'appels, etc. La couche de taxation (3) centralisée présente une interface avec le module PRM, « Partner Relationship Management », (45) qui gère la relation avec les partenaires comme les fournisseurs de contenus ou les MVNO (« Mobile Virtual Network Operator »). Un MVNO est un opérateur « virtuel » qui peut proposer un service complet de téléphonie mobile sans disposer de spectre de fréquence et d'infrastructures de télécommunication, en achetant tout simplement des minutes de communications à des opérateurs pour ensuite les revendre à ses clients sous sa propre marque. Les autres éléments du système concernent des modules logiciels de facturation (44), de gestion des offres (42), de système de rechargement (41), etc... Ces éléments des systèmes d'information sont contenus dans un quatrième niveau (4), correspondant au SI pour Systèmes d'Information.

Bien que se présentant comme un serveur de taxation (3) unique au niveau des interfaces avec les autres systèmes, le serveur de taxation (3) centralisé est, pour des raisons de dimensionnement, de performances et de fiabilité, constitué d'un ensemble de couches de processus réparties sur plusieurs systèmes, eux-mêmes répartis sur au moins deux sites.

Lors d'un fonctionnement normal du serveur de taxation une première couche appelée couche frontale gère la présentation des données et leur routage par l'intermédiaire du module de formatage et de routage (33) vers le module standard (314) permettant la valorisation (34) et la gestion de la balance (35) d'une seconde couche appelée couche dorsale et apte à les traiter. La seconde couche met en oeuvre les fonctions applicatives et la gestion des données. Cette couche dorsale est segmentée en plusieurs instances, chacune gérant un sous-ensemble des clients du fait des contraintes de dimensionnement des serveurs et des bases de données.

Pour chaque usage traité en temps réel, les échanges suivants ont lieu entre la couche de contrôle (2) et le serveur de taxation (3) centralisé :
- avant l'usage, la couche de contrôle (2) exécute un programme qui demande l'autorisation de donner l'usage du service à la couche de taxation (3). Celle-ci effectue une prévalorisation de l'usage, sur la base d'un usage complet pour les usages facturés à l'acte (envoi d'un SMS, utilisation d'un service) ou d'un jeton (trois minutes de communication, 100 Koctets de données) pour les usages facturés au compteur. Si le crédit du client est suffisant, la couche de taxation (3) accorde l'autorisation et réserve le montant correspondant dans la balance (35). En fonction de la réponse de la couche de taxation (3), le programme de la couche de contrôle (2) refuse l'usage ou le permet et dans ce cas, pilote les éléments de réseau correspondants (11-15).
- au cours de l'usage, pour les usages facturés au compteur, la couche de contrôle (2), à l'approche de l'épuisement du jeton en cours, redemande un nouveau jeton à la couche de taxation (3), qui déroule la même séquence : valorisation, autorisation, réservation, pour lui accorder ou non un autre jeton.
- à la fin de l'usage, la couche de contrôle (2) envoie un message de fin de l'usage, le serveur centralisé de taxation refait une valorisation précise de l'usage en fonction des éléments réellement consommés qui lui sont transmis, met à jour la balance du client et libère les réservations correspondantes.

Alors que les demandes d'autorisation ou de renouvellement de jetons sont des transactions synchrones à forte contrainte du fait des protocoles d'établissement d'appel dans les réseaux (réponse en moins de 50 ms), la couche de contrôle (2) devant attendre la réponse pour continuer le traitement, le message de fin d'usage peut être traité en asynchrone, avec un léger différé en régime nominal (de l'ordre de la seconde), sans que le client en ait la perception.

La mise en place de cette architecture entraîne une consultation synchrone du serveur de taxation avant tout usage dans le réseau, pour les clients traités en temps réel. Le taux de disponibilité habituel des éléments de réseaux, est de 99,999% (soit deux heures d'arrêt en quarante ans). Par contre, le taux de disponibilité que l'on peut raisonnablement espérer du serveur de taxation centralisé, en fonction des modes de déploiement des nouvelles versions mises en place, et des pannes potentielles dites longues dont la durée peut atteindre 24 heures en cas de destruction accidentelle des contextes clients, est entre 99,5% et 99,9%, même si le serveur de taxation dispose d'une sécurisation des configurations matérielles et de la mise en place d'architectures résistantes aux pannes, réparties sur plusieurs sites pour tenir compte également de la possible destruction d'un site.

Pour atteindre ou approcher le niveau de disponibilité requis (99,999%) vu du réseau, il est impératif qu'en plus de ces mesures de sécurité, le serveur dispose de plusieurs niveaux pour faire face aux pannes logicielles ou les erreurs d'exploitation, qui touchent les parties sujettes aux mises à jour, donc les processus traitant l'application et la gestion des données situés essentiellement dans la partie dorsale de la couche contrôle.

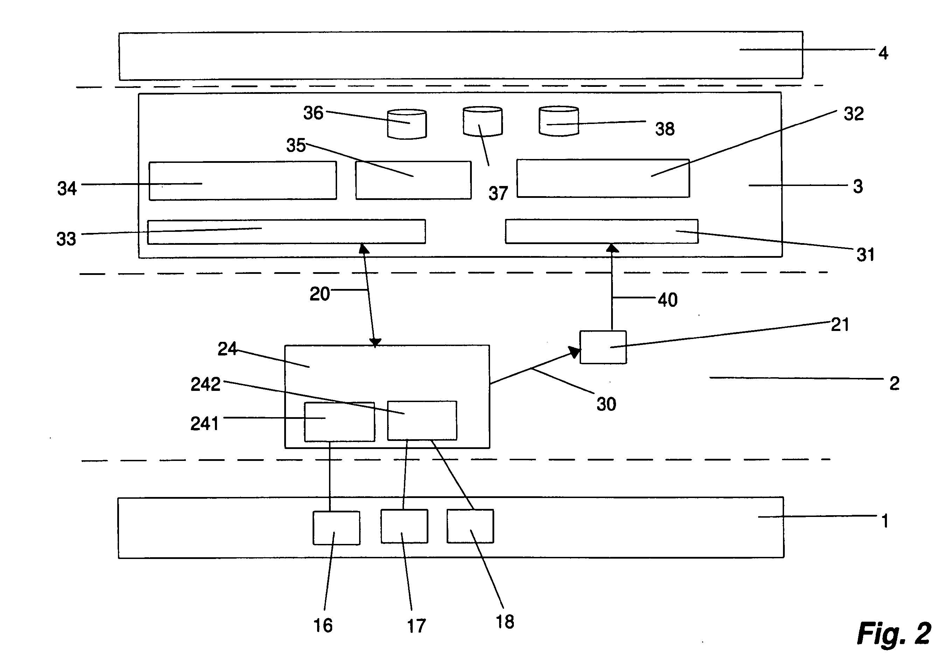

Le premier niveau, implanté au niveau de la couche contrôle permet de palier aux problèmes de réseau entre la couche de contrôle et la couche de taxation et constitue le mode dégradé simple, décrit à la figure 2, lorsque le serveur ne dispose pas d'autre niveau.

Les éléments de la couche de contrôle (2) étant beaucoup moins exposés aux changements, donc aux pannes logicielles et aux erreurs d'exploitation. Leur disponibilité est donc plus forte et il est donc en général proposé d'établir un mode de fonctionnement où ils assurent de manière autonome un service dégradé au client lorsque le serveur de taxation (3) centralisé est indisponible.

L'élément de la couche de contrôle (2) dispose donc d'une première politique d'autorisation de secours, qu'il applique lorsque le serveur de taxation (3) centralisé n'est pas disponible, en lieu et place des transactions d'autorisation ou des redemandes de jetons. Cette première politique de secours consiste également à la fin de l'usage, à préparer comme dans le mode nominal les éléments pour faire la taxation finale, mais au lieu de les transmettre directement au module de formatage et de routage (313), ils sont écrits dans un fichier CDR (21) qui sera traité en mode différé, par le module «offline» (301), dès qu'il sera disponible.

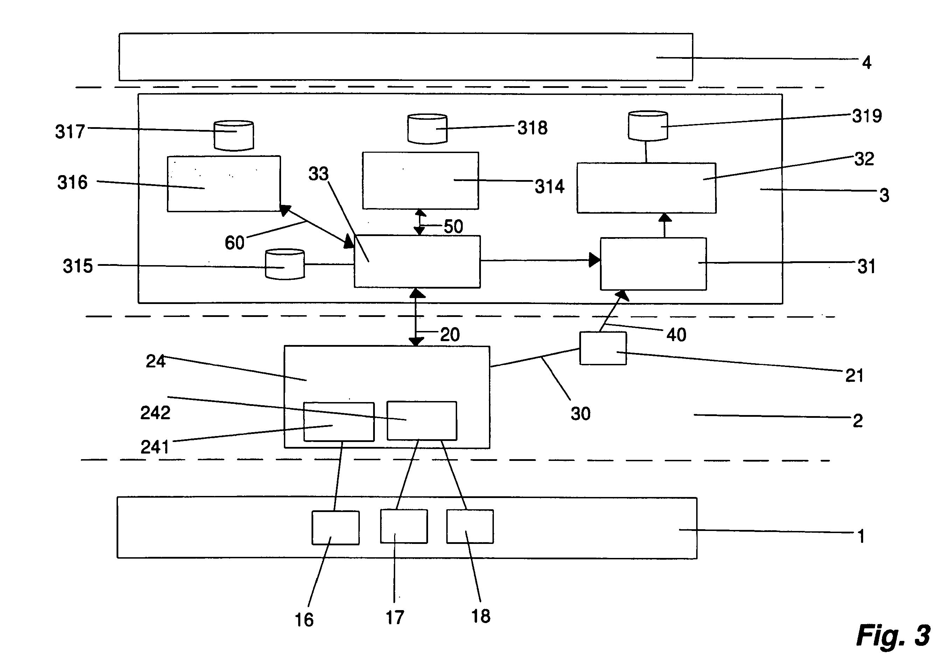

L'invention consiste à mettre en oeuvre un deuxième niveau permettant de palier aux pannes plus lourdes qui, lorsqu'il est combiné au premier niveau, constitue le mode dégradé multi-niveau, illustré à la figure 3..

Dans ce cas, le premier niveau reste celui assuré par les éléments de contrôle décrits précédemment, qui n'adressent plus que les indisponibilités du réseau d'interconnexion ou de l'interface d'entrée du serveur de taxation.

Le second niveau est basé sur le fait que la couche de taxation (3) centralisé est elle-même une structure complexe avec au moins deux couches : une couche frontale de présentation et de routage (33) et une couche dorsale assurant le traitement et la gestion de données (314).

La couche frontale ne gère pas de données à mettre à jour et de plus est peu sensible aux évolutions fonctionnelles ou aux évaluations de l'offre, ce qui la rend beaucoup moins exposée aux pannes logicielles ou aux erreurs d'exploitation bloquantes. Elle présente donc une bonne stabilité (MTBF important) et un délai de remise en marche court (MTTR faible).

Cette couche est donc utilisée pour mettre en place un second niveau de mode dégradé au niveau du module de formatage et de routage (33), appliquant une deuxième politique d'autorisation de secours plus adaptée aux pannes potentiellement longues (panne logicielle ou erreur d'exploitation) survenant dans la couche dorsale.

On peut mettre en oeuvre un fonctionnement en mode dégradé au niveau de cette couche lorsque tout ou partie de la couche dorsale est indisponible, de deux façons. Soit en mettant en oeuvre dans la couche elle-même la deuxième politique d'autorisation de secours, ce qui peut paraître plus simple, mais a tendance à complexifier ce module donc à le rendre plus fragile, d'où une limitation sur la complexité de la politique de secours possible. Soit, en utilisant comme deuxième politique de secours, sa capacité de routage pour faire appel dans le mode dégradé à des modules de secours (316) mettant en oeuvre la couche dorsale de façon similaire à l'application actuelle et constitués par exemple par les versions n-1 du programme réputées fiables. C'est cette dernière possibilité qui est illustrée sur la figure 3. Ainsi lors du traitement en temps réel la politique de secours du deuxième niveau consiste donc à utiliser un module de secours (316) lorsque la liaison avec le module nominal est interrompue.

Le fonctionnement en mode normal, c'est-à-dire lorsqu'il n'y a pas de panne, du serveur dégradé multi-niveau est donc le suivant :
- demande d'autorisation de donner l'usage au serveur par les éléments de contrôle ;
- prévalorisation de l'usage par vérification du crédit client par le serveur et accord de l'autorisation par le serveur ;
- pilotage des éléments du réseau correspondant par les éléments si le serveur a donné l'autorisation ;
- envoi d'un message de fin d'usage par les éléments de la couche de contrôle (2) à la fin de l'usage ;
- valorisation précise de l'usage.

En cas de panne et ainsi lorsque le serveur est indisponible l'étape d'une part de prévalorisation de l'usage par vérification du crédit client par le serveur et d'autre part d'accord de l'autorisation par le serveur est remplacée par une étape mettant en oeuvre une deuxième politique d'autorisation de secours à deux niveaux qui consiste à :
a. si l'indisponibilité du serveur provient d'une panne type panne de réseau (20), le premier niveau du mode dégradé multi-niveau intervient. Pour cela la couche de contrôle (2) comporte un compteur de temps. Si la réponse du serveur de taxation (3) n'est pas donnée dans un délai déterminé en principe inférieur à 50 ms c'est qu'il y a une panne et la première politique de secours est déclenchée.
   L'information sur l'usage va donc circuler (30), non plus directement (20) de la couche de contrôle (2) au module de formatage et de routage (33), mais par le module CDR (21). Il y a évaluation de l'usage et stockage de cette évaluation dans le CDR en attendant la remise en marche du réseau.
   Le serveur de taxation (3) interroge régulièrement le fichier CDR pour actualiser la base de données et effectuer la taxation (40).
   Ce processus comporte des moyens permettant de limiter l'usage selon le type de services de données et du volume de données.
b- si l'indisponibilité du serveur provient d'une panne plus lourde et difficile à gérer type panne logicielle(50), le deuxième niveau du mode dégradé multi-niveau intervient. Pour cela il y a aussi un compteur de temps au niveau de la couche frontale de la couche de taxation (3) qui va permettre de surveiller la disponibilité de la couche dorsale de la couche de taxation (3) à partir de sa réponse à une requête de la couche frontale dans un délai déterminé. Si la couche frontale ne répond pas dans un délai donné il y a exécution de la deuxième politique de secours par une couche frontale de la couche de taxation (3), la circulation (60) des éléments étant dans ce cas réalisée via le module de secours (316).

Il y a ensuite :
- préparation à la fin de l'usage des éléments représentatifs de l'usage effectué par des moyens de fin d'usage,
- mémorisation de ces éléments représentatifs de l'usage effectuée dans un fichier de mémorisation par des moyens de mémorisation,
- interrogation périodique du fichier de mémorisation pour effectuer la taxation en différé dès que la communication entre la couche frontale de la couche de taxation (3) et la couche dorsale du serveur de taxation (3) est rétablie.

En parallèle, le traitement des clients en mode différé continue à se faire via le module du mode différé (311).

Le mode dégradé multi-niveau ainsi décrit présente plusieurs avantages :
- le service global rendu au client est meilleur,
- le service fortement dégradé est limité aux pannes réseau et de la couche frontale (donc à plus faible occurrence et avec temps de réparation court). Le service dégradé est proche du service nominal de base pour les autres pannes, plus fréquentes et avec, pour certaines, un temps de réparation très long.
- le risque financier pour l'opérateur, lié aux différences de politiques d'autorisation entre le mode dégradé et le mode nominal, s'en trouve fortement réduit.
- le traitement du mode dégradé au niveau des éléments de contrôle reste simple.
- les protocoles standards de dialogue entre la couche de contrôle (2) et le serveur de taxation (3) centralisé peuvent être utilisés.
- la complexité logicielle pour traiter les offres et la balance client reste centralisée dans le serveur de taxation (3), même en mode dégradé et ne concerne donc que l'éditeur de logiciel de taxation, habitué à la traiter.

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de fiabilisation multi-niveau des services rendus par un réseau utilisant un serveur de taxation centralisé pour autoriser l'usage d'un service offert par le réseau, si le crédit client est suffisant, comportant un premier niveau formé par une couche de contrôle (2) qui comprend des moyens de surveillance et de vérification de l'attribution, du déroulement et de la finalisation des usages des services, et un deuxième niveau formé par la couche de taxation centralisée (3) qui comprend deux modes de traitement, l'un en temps réel, l'autre en différé, faisant intervenir les mêmes moyens de valorisation,
le premier niveau formé par la couche de contrôle (2) comprend un élément de surveillance de l'absence de réponse dans un délai déterminé de la couche de taxation (3) du serveur de taxation à une requête de la couche de contrôle (2) et permet, lors d'une absence de réponse de la couche de taxation (3) si le réseau entre la couche de contrôle (2) et la couche de taxation est indisponible pour un traitement en temps réel, de déclencher un premier plan de secours en basculant la transmission des données de taxation vers un module de traitement en mode différé, et
le deuxième niveau formé par la couche de taxation centralisée (3), subdivisée en une couche frontale comprenant des moyens qui permettent la présentation et le routage des données de taxation et une couche dorsale qui comprend des moyens pour assurer le traitement et la gestion des données de taxation, permet d'effectuer les étapes suivantes :
- la surveillance de la disponibilité de la couche dorsale de la couche de taxation (3) à partir de sa réponse à une requête provenant de la couche frontale de la couche de taxation dans un délai déterminé par l'intermédiaire de moyens de surveillance,
- l'exécution d'une politique de secours par une couche frontale de la couche de taxation (3) en cas d'indisponibilité de la couche dorsale de taxation par des moyens de mise en oeuvre de la politique de secours (316),
- la préparation à la fin de l'usage des éléments représentatifs de l'usage effectué par des moyens de contrôle de l'usage,
- la mémorisation de ces éléments représentatifs de l'usage effectué dans un fichier de mémorisation par des moyens de mémorisation (318),
- l'interrogation périodique du fichier de mémorisation (318) pour effectuer la taxation en différé dès que la communication entre la couche frontale de la couche de taxation (3) et la couche dorsale de la couche de taxation (3) est rétablie.

2. Procédé de fiabilisation des services rendus par un réseau utilisant un serveur de taxation centralisé selon la revendication 1 **caractérisé en ce que** lors de l'étape d'exécution d'une politique de secours les informations provenant de la couche frontale sont envoyées à un module de secours (316) grâce à la capacité de présentation et de routage de la couche frontale.

3. Procédé de fiabilisation des services rendus par un réseau utilisant un serveur de taxation centralisé selon la revendication 2 **caractérisé en ce que** le délai de l'étape de surveillance est de 50 ms.

4. Dispositif de fiabilisation des services rendus par un réseau utilisant un serveur de taxation centralisé pour autoriser l'usage d'un service offert par le réseau si le crédit client est suffisant, le dispositif comprenant une couche réseau qui communique avec une couche de contrôle (2) de politique de secours, elle-même communiquant avec une couche de taxation (3) subdivisée en une couche frontale de présentation et de routage des données et une couche dorsale de traitement et de gestion des données de taxation, la couche de contrôle (2) comportant des éléments permettant la mise en oeuvre d'une première politique de secours simple au niveau de la couche de contrôle (2) en basculant la transmission des données de taxation vers un module alternatif de traitement, **caractérisé en ce que** lesdits éléments de la couche de contrôle (2) comprennent un élément logiciel comportant des moyens de surveillance de l'absence de réponse de la couche de taxation (3), et
**en ce que** des éléments de la couche frontale de la couche de taxation (3) comportent des moyens permettant la surveillance de la réponse dans un délai déterminé de la couche dorsale de la couche de taxation (3) à une requête de la couche frontale, ces moyens de surveillance étant reliés à des moyens d'exécution d'une deuxième politique de secours par la couche contrôle situés dans la couche frontale de la couche de taxation (3), des moyens de contrôle de l'usage effectué permettant la préparation à la fin de l'usage des éléments représentatifs de l'usage effectué et des moyens de mémorisation permettant de mémoriser les informations concernant l'usage pendant la durée d'indisponibilité de la couche dorsale de la couche de taxation (3).

5. Dispositif de fiabilisation des services rendus par un réseau utilisant un serveur de taxation centralisé selon la revendication 4 **caractérisé en ce que** les moyens de surveillance sont constitués par un compteur de temps disposé dans la couche frontale.

6. Dispositif de fiabilisation des services rendus par un réseau utilisant un serveur de taxation centralisé selon la revendication 5 **caractérisé en ce que** la couche frontale comporte un module de formatage et de routage (313) des requêtes étant capable de modifier son routage et basculer en mode dégradé lorsque le réseau pour accéder à la couche dorsale de la couche de taxation est indisponible.

7. Dispositif de fiabilisation des services rendus par un réseau utilisant un serveur de taxation centralisé selon la revendication 6 **caractérisé en ce que** la couche dorsale comporte un module nominal de traitement et gestion des données (314) et un module de secours de traitement et gestion des données (316), les deux modules étant en relation avec le module de formatage et de routage (313)

8. Dispositif de fiabilisation des services rendus par un réseau utilisant un serveur de taxation centralisé selon la revendication 7**caractérisé en ce que** les moyens d'exécution de la politique de secours sont constitués par le module de formatage et de routage (313) relié au module de secours de traitement et gestion des données (316).

9. Dispositif de fiabilisation des services rendus par un réseau utilisant un serveur de taxation centralisé selon la revendication 8 **caractérisé en ce que** les moyens de contrôle d'usage sont constitués par des modules de valorisation d'usage.

10. Dispositif de fiabilisation des services rendus par un réseau utilisant un serveur de taxation centralisé selon la revendication 9 **caractérisé en ce que** les moyens de mémorisation sont constitués d'un module de mémorisation (318).

## Claims

1. Method for multi-level enhanced reliability of services provided by a network using a centralized charging server, to authorize use of a service offered by the network, if client credit is sufficient, comprising a first level formed by a control layer (2) which comprises means to monitor and verify the allocation, conducting and finalization of usages of services, and a second level formed by the centralized charging layer (3) which comprises two processing modes, one real-time the other deferred-time, using the same valuing means,
the first level formed by the control layer (2) comprises an element to monitor the absence of response within a determined time interval by the charging layer (3) of the charging server, to a request from the control layer (2) and, in the absence of response by the charging layer (3), if the network between the control layer (2) and the charging layer is unavailable for real-time processing, to trigger a first back-up plan by switching transmission of charging data to a deferred-time processing module, and
the second level formed by the centralized charging layer (3) sub-divided into a front layer comprising means enabling the presentation and routing of charging data, and a back layer which comprises means to ensure processing and management of the charging data, allows the following steps to be carried out:
- monitoring the availability of the back layer of the charging layer (3) from its response to a request received from the front layer of the charging layer within a determined time interval, via monitoring means,
- implementation of a backup policy by a front layer of the charging layer (3) in the event of unavailability of the back charging layer, via means implementing the backup policy (316),
- at end of service usage, preparation by the usage control means of elements representing said usage,
- memorizing these elements representing said usage in a memory file, via memorizing means (318),
- periodically querying the memory file (318) to perform deferred charging as soon as communication between the front layer of the charging layer (3) and the back layer of the charging layer (3) is restored.

2. Method for enhanced reliability of services provided by a network using a centralized charging server according to claim 1, **characterized in that** during the step to implement a backup policy, the data derived from the front layer is sent to a backup module (316) by means of the presentation and routing capacity of the front layer.

3. Method for enhanced reliability of services provided by a network using a centralized charging server according to claim 2, **characterized in that** the time of the monitoring step is 50 ms.

4. Device for enhanced reliability of services provided by a network using a centralized charging server, to authorize usage of a service offered by the network if customer credit is sufficient, the device comprising a network layer which communicates with a control layer (2) controlling backup policy, itself communicating with a charging layer (3) subdivided into a front layer to present and route data and a back layer to process and manage charging data, the control layer (2) comprising elements enabling the implementation of a first simple backup policy at the control layer (2) by switching transmission of charging data to an alternative processing module, **characterized in that** said elements of the control layer (2) comprise a software element containing monitoring means to monitor absence of response by the charging layer (3), and
**in that** elements of the front layer of the charging layer (3) comprise means to permit monitoring of response within a determined time interval by the back layer of the charging layer (3) to a request from the front layer, these monitoring means being connected to means to implement a second backup policy by the control layer that are located in the front layer of the charging layer (3), service usage control means enabling the preparation of elements representing this usage when such usage ends, and memorizing means allowing memorization of data on the said usage during the time of unavailability of the back layer of the charging layer (3).

5. Device for enhanced reliability of services provided by a network using a centralized charging server according to claim 4, **characterized in that** the monitoring means consist of a time meter arranged in the front layer.

6. Device for enhanced reliability of services provided by a network using a centralized charging server according to claim 5, **characterized in that** the front layer comprises a request formatting and routing modules (313) that is capable of modifying its routing and switching to failsoft mode when the network to access the back layer of the charging layer is unavailable.

7. Device for enhanced reliability of services provided by a network using a centralized charging server according to claim 6, **characterized in that** the back layer comprises a nominal data processing and management module (314) and a backup data processing and management module (316), the two modules being linked with the formatting and routing module (313).

8. Device for enhanced reliability of services provided by a network using a centralized charging server according to claim 7, **characterized in that** the means to implement the backup policy consist of the formatting and routing module (313) linked with the backup data processing and management module (316).

9. Device for enhanced reliability of services provided by a network using a centralized charging server according to claim 8, **characterized in that** the usage control means consist of usage valuing modules.

10. Device for enhanced reliability of services provided by a network using a centralized charging server according to claim 9, **characterized in that** the memorizing means consist of a memory module (318).

## Patentansprüche

1. Verfahren zum Verbessern der Zuverlässigkeit auf mehreren Ebenen für Dienste, die von einem Netzwerk geleistet werden, unter Verwendung eines zentralen Gebührenerfassungsservers, um die Nutzung eines von dem Netzwerk angebotenen Dienstes zu genehmigen, wenn das Kundenguthaben ausreicht, umfassend eine erste Ebene, die aus einer Kontrollschicht (2) gebildet wird, die Mittel zum Überwachen und Überprüfen der Zuweisung, der Abwicklung und der Erledigung der Nutzungen der Dienste umfasst, und eine zweite Ebene, die aus der zentralen Gebührenerfassungsschicht (3) gebildet wird, die zwei Verarbeitungsmodi umfasst, einen in Echtzeit und den andern mit zeitlicher Verzögerung, welche die gleichen Bewertungsmittel einsetzen,
wobei die erste Ebene, die durch die Kontrollschicht (2) gebildet wird, ein Element zum Überwachen des Fehlens einer Antwort innerhalb einer bestimmten Frist von der Gebührenerfassungsschicht (3) des Gebührenerfassungsservers auf eine Anfrage der Kontrollschicht (2) umfasst und es ermöglicht, bei Fehlen einer Antwort der Gebührenerfassungsschicht (3), wenn das Netzwerk zwischen der Kontrollschicht (2) und der Gebührenerfassungsschicht für eine Echtzeitverarbeitung nicht zur Verfügung steht, eine erste Hilfsmaßnahme auszulösen, indem sie die Übertragung der Gebührenerfassungsdaten auf ein Verarbeitungsmodul im zeitversetzten Modus umschaltet, und
wobei die zweite Ebene, die durch die zentrale Gebührenerfassungsschicht (3) gebildet wird, die in eine Frontend-Schicht, die Mittel umfasst, welche die Präsentation und die Leitweglenkung der Gebührenerfassungsdaten ermöglichen, und eine Backend-Schicht, die Mittel umfasst, um die Verarbeitung und die Verwaltung der Gebührenerfassungsdaten sicherzustellen, unterteilt ist, es ermöglicht, die folgenden Schritte auszuführen:
- Überwachen der Verfügbarkeit der Backend-Schicht der Gebührenerfassungsschicht (3) aus ihrer Antwort auf eine Anfrage, die aus der Frontend-Schicht der Gebührenerfassungsschicht stammt, innerhalb einer bestimmten Frist, die über Überwachungsmittel bestimmt wird,
- Ausführen einer Hilfsstrategie durch eine Frontend-Schicht der Gebührenerfassungsschicht (3) bei Unverfügbarkeit der Frontend-Gebührenerfassungsschicht durch Mittel zum Durchführen der Hilfsstrategie (316),
- am Ende der Nutzung Vorbereiten der Elemente, welche die Nutzung darstellen, die durch Nutzungskontrollmittel ausgeführt wurde,
- Speichern dieser Elemente, welche die ausgeführte Nutzung darstellen, in einer Speicherdatei durch Speichermittel (318),
- periodisches Abfragen der Speicherdatei (318), um die Gebührenerfassung zeitversetzt auszuführen, sobald die Verbindung zwischen der Frontend-Schicht der Gebührenerfassungsschicht (3) und der Backend-Schicht der Gebührenerfassungsschicht (3) wiederhergestellt ist.

2. Verfahren zum Verbessern der Zuverlässigkeit der Dienste, die von einem Netzwerk geleistet werden, unter Verwendung eines zentralen Gebührenerfassungsservers nach Anspruch 1, **dadurch gekennzeichnet, dass** bei dem Schritt des Ausführens einer Hilfsstrategie, die Informationen aus der Frontend-Schicht dank der Fähigkeit zur Präsentation und Leitweglenkung der Frontend-Schicht an ein Hilfsmodul (316) gesendet werden.

3. Verfahren zum Verbessern der Zuverlässigkeit von Diensten, die von einem Netzwerk geleistet werden, unter Verwendung eines zentralen Gebührenerfassungsservers nach Anspruch 2, **dadurch gekennzeichnet, dass** die Frist des Überwachungsschritts 50 ms beträgt.

4. Vorrichtung zum Verbessern der Zuverlässigkeit von Diensten, die von einem Netzwerk geleistet werden, unter Verwendung eines zentralen Gebührenerfassungsservers, um die Nutzung eines von dem Netzwerk angeboten Dienstes zu genehmigen, wenn das Kundenguthaben ausreicht, wobei die Vorrichtung eine Netzwerkschicht umfasst, die mit einer Hilfsstrategie-Kontrollschicht (2) in Verbindung steht, die wiederum mit einer Gebührenerfassungsschicht (3) in Verbindung steht, die in eine Fronten-Schicht zur Präsentation und Leitweglenkung der Daten und eine Backen-Schicht zum Verarbeiten und Verwalten der Gebührenerfassungsdaten unterteilt ist, wobei die Kontrollschicht (2) Elemente umfasst, welche die Durchführung einer ersten einfachen Hilfsstrategie auf Kontrollschichtebene (2) ermöglichen, indem sie die Übertragung der Gebührenerfassungsdaten an ein alternatives Verarbeitungsmodul umschalten, **dadurch gekennzeichnet, dass** die Elemente der Kontrollschicht (2) ein Software-Element umfassen, das Mittel zum Überwachen des Fehlens einer Antwort der Gebührenerfassungsschicht (3) umfasst, und
dass Elemente der Frontend-Schicht der Gebührenerfassungsschicht (3) Mittel umfassen, welche die Überwachung der Antwort innerhalb einer bestimmten Frist der Backend-Schicht der Gebührenerfassungsschicht (3) auf eine Anfrage der Frontend-Schicht ermöglichen, wobei diese Überwachungsmittel verbunden sind mit Mitteln zum Ausführen einer zweiten Hilfsstrategie durch die Kontrollschicht, die sich in der Frontend-Schicht der Gebührenerfassungsschicht (3) befinden, mit Mitteln zum Kontrollieren der ausgeführten Nutzung, welche am Ende der Nutzung die Vorbereitung von Elementen, welche die ausgeführte Nutzung darstellen, ermöglichen, und mit Speichermitteln, die es ermöglichen, die Informationen über die Nutzung während der Dauer der Unverfügbarkeit der Backend-Schicht der Gebührenerfassungsschicht (3) zu speichern.

5. Vorrichtung zum Verbessern der Zuverlässigkeit von Diensten, die von einem Netzwerk geleistet werden, unter Verwendung eines zentralen Gebührenerfassungsservers nach Anspruch 4, **dadurch gekennzeichnet, dass** die Überwachungsmittel aus einem Zeitzähler bestehen, der in der Frontend-Schicht angeordnet ist.

6. Vorrichtung zum Verbessern der Zuverlässigkeit von Diensten, die von einem Netzwerk geleistet werden, unter Verwendung eines zentralen Gebührenerfassungsservers nach Anspruch 5, **dadurch gekennzeichnet, dass** die Frontend-Schicht ein Modul zum Formatieren und Leitweglenken (313) der Anfragen umfasst, das in der Lage ist, seine Leitweglenkung zu ändern und auf einen Notlauf umzuschalten, wenn das Netzwerk zum Zugreifen auf die Backend-Schicht der Gebührenerfassungsschicht nicht verfügbar ist.

7. Vorrichtung zum Verbessern der Zuverlässigkeit von Diensten, die von einem Netzwerk geleistet werden, unter Verwendung eines zentralen Gebührenerfassungsservers nach Anspruch 6, **dadurch gekennzeichnet, dass** die Backend-Schicht ein Nennmodul zum Verarbeiten und Verwalten der Daten (314) und ein Hilfsmodul zum Verarbeiten und Verwalten der Daten (316) umfasst, wobei die beiden Module mit dem Modul zum Formatieren und Wegeleiten (313) zusammenhängen.

8. Vorrichtung zum Verbessern der Zuverlässigkeit von Diensten, die von einem Netzwerk geleistet werden, unter Verwendung eines zentralen Gebührenerfassungsservers nach Anspruch 7, **dadurch gekennzeichnet, dass** die Mittel zum Ausführen der Hilfsstrategie aus dem Modul zum Formatieren und Wegeleiten (313) bestehen, das mit dem Hilfsmodul zum Verarbeiten und Verwalten der Daten (316) verbunden ist.

9. Vorrichtung zum Verbessern der Zuverlässigkeit von Diensten, die von einem Netzwerk geleistet werden, unter Verwendung eines zentralen Gebührenerfassungsservers nach Anspruch 8, **dadurch gekennzeichnet, dass** die Mittel zum Kontrollieren der Nutzung aus Modulen zum Bewerten der Nutzung bestehen.

10. Vorrichtung zum Verbessern der Zuverlässigkeit von Diensten, die von einem Netzwerk geleistet werden, unter Verwendung eines zentralen Gebührenerfassungsservers nach Anspruch 9, **dadurch gekennzeichnet, dass** die Speichermittel aus einem Speichermodul (318) bestehen.
